# EUROPEAN PATENT APPLICATION

(11) **EP 4 815 574 A1**
(43) Date of publication of application: **30.09.2026**
(21) Application number: 23959473.2
(22) Date of filing: 22.11.2023
(51) Int. Cl.: H04W 52/18, H04W 52/16, H04W 74/0833

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); SUN, Weiqi, Beijing 100190 (CN)
(74) Representative: Hoffmann Eitle
(86) International application number: PCT/JP2023/042068
(87) International publication number: WO 2025/109730

(57) **Abstract**

A terminal according to one aspect of the present disclosure includes a receiving section that receives configuration information of a pathloss (PL) value or a pathloss (PL) offset value of a Physical random access channel (PRACH) transmitted to a UL reception point, and a control section that controls transmission power of the PRACH, based on the configuration information. According to one aspect of the present disclosure, it is possible to appropriately control UL transmission power.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, it is studied that, to enhance UL coverage, a UL reception point is provided in addition to typical transmission/reception points. A Heterogeneous Network (HetNet) using a macro Base Station (BS) (DL transmission point) and a micro BS (UL reception point) and the like are also under study.

However, in a case where an RS for pathloss (PL) calculation (pathloss RS) is transmitted from a DL transmission point, it remains unclear how to determine a PL value or a PL offset value for the UL reception point (or the micro BS) when a terminal (user terminal, User Equipment (UE)) performs UL transmission. Unless the PL value or the PL offset value can be correctly determined, UL transmission power may not be controlled appropriately.

Thus, an object of the present disclosure is to provide a terminal, a radio communication method, and a base station that enable appropriate control of UL transmission power.

### Solution to Problem

A terminal according to one aspect of the present disclosure includes a receiving section that receives configuration information of a pathloss (PL) value or a pathloss (PL) offset value of a Physical random access channel (PRACH) transmitted to a UL reception point, and a control section that controls transmission power of the PRACH, based on the configuration information.

### Advantageous Effects of Invention

According to one aspect of the present disclosure, it is possible to appropriately control UL transmission power.

### Brief Description of Drawings

[FIG. 1] FIG. 1A is a diagram to show an example of typical deployment of a transmission/reception point. FIG. 1B is a diagram to show an example of UL dense deployment.
[FIG. 2] FIG. 2 is a diagram to show an example of DL/UL coverage of a Heterogeneous Network (HetNet).
[FIG. 3] FIG. 3A is a diagram to show an example of association between RS indices and PL values. 3B is a diagram to show an example of association of RS indices and delta PL values.
[FIG. 4] FIG. 4 is a diagram to show an example of option 1 in UL high density deployment.
[FIG. 5] FIG. 5 is a diagram to show an example of option 2 in UL high density deployment.
[FIG. 6] FIG. 6A is a diagram to show a first configuration method for a PL value or a PL offset of option 1-1. FIG. 6B is a diagram to show a second configuration method for the PL value or the PL offset of option 1-1.
[FIG. 7] FIG. 7 is a diagram to show an example of a PL offset value of option 1-1.
[FIG. 8] FIG. 8A is a diagram to show a first configuration method for PL values or PL offsets of option 1-2. FIG. 8B is a diagram to show a second configuration method for the PL values or the PL offsets of option 1-2.
[FIG. 9] FIG. 9 is a diagram to show an example of PL offset values of option 1-2.
[FIG. 10] FIG. 10 is a diagram to show an example of correspondence between DCI codepoints and PL offset values in option 2-2.
[FIG. 11] FIG. 11 is a diagram to show an example of a schematic structure of a radio communication system according to one embodiment.
[FIG. 12] FIG. 12 is a diagram to show an example of a structure of a base station according to one embodiment.
[FIG. 13] FIG. 13 is a diagram to show an example of a structure of a user terminal according to one embodiment.
[FIG. 14] FIG. 14 is a diagram to show an example of a hardware structure of the base station and the user terminal according to one embodiment.
[FIG. 15] FIG. 15 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Scenario 1: UL Dense Deployment (UL-only TRP))

In Rel-15 NR, coverages (reachable distances) of a PUSCH, PUCCH, PRACH, PDSCH, PDCCH, and PBCH are not equal to each other. The PUSCH coverage is restricted, especially at a high frequency. For future radio communication systems (for example, Rel. 18, Rel. 19, or later versions), improvement in at least one of UL coverage and UL throughput is under study.

It is studied that, to enhance UL coverage, a UL reception point is provided in addition to typical transmission/reception points. Thus, an example of typical deployment of a transmission/reception point and an example of deployment provided with a UL reception point (UL dense deployment) will be described.

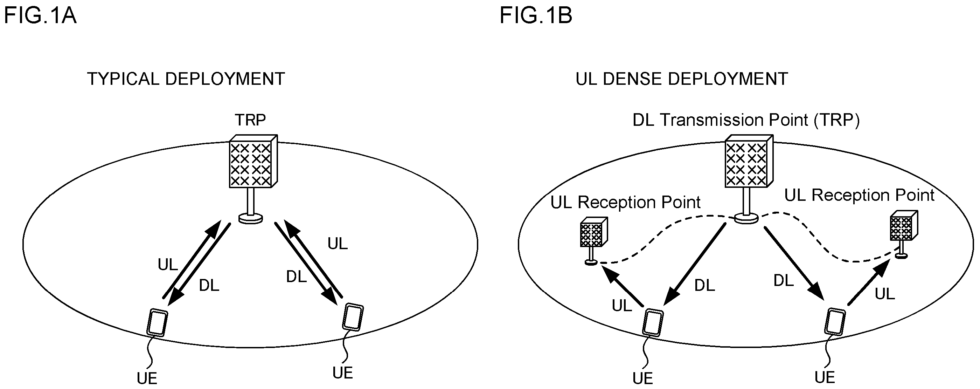

FIG. 1A is a diagram to show an example of typical deployment of a transmission/reception point. In FIG. 1A, each UE receives a DL signal from the transmission/reception point (TRP) and transmits a UL signal to the TRP. For example, the UE and the TRP being far from each other leads to large pathloss, which may degrade communication quality.

FIG. 1B is a diagram to show an example of UL dense deployment. It is studied that, to enhance UL coverage, such a UL reception point as that shown in FIG. 1B is provided in addition to such a DL transmission point as that shown in FIG. 1A. In FIG. 1B, each UE receives a DL signal from a DL transmission point corresponding to a macro cell (TRP/central TRP/DL TRP/macro TRP) and transmits a UL signal to a corresponding UL reception point (for example, a reception point with lower pathloss/received power). Note, however, that the UE can also perform UL transmission to the DL transmission point.

Using such UL dense deployment as that shown in FIG. 1B reduces pathloss, improves UL signaling quality, and obtains a higher coding rate, as compared to such typical deployment as that shown in FIG. 1A, thereby enabling both coverage and a UL data rate to be improved. The UL reception point primarily performs reception, and thus has a reduced number of required functions (such as a power amplifier, for example) and low cost as compared to a transmission/reception point corresponding to a typical small cell, leading to extremely simple deployment management.

### (Scenario 2: Decoupling of DL TRP and UL TRP in HetNet)

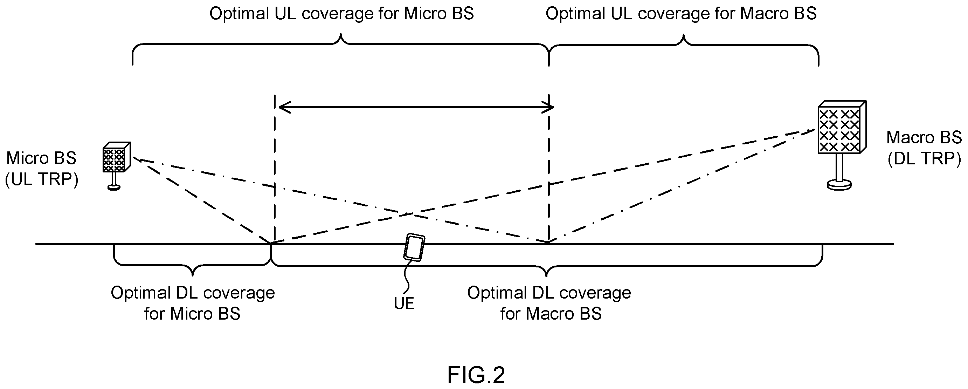

In the present disclosure, a Heterogeneous Network (HetNet) using a macro Base Station (BS) (DL TRP) and a micro BS (UL TRP) may be applied (FIG. 2). In the normal HetNet, transmission power of the macro BS is different from that of the micro BS. The optimal DL coverage and the optimal UL coverage are different. For example, the DL coverage is determined by RSRP, and the UL coverage is determined by pathloss (PL).

In an example of FIG. 2, the UE is included in the optimal DL coverage of the macro BS and the optimal UL coverage of the micro BS. In this case, the UE can receive DL from the macro BS and transmit UL to the micro BS. Note, however, that the UE may transmit some reference signals/channels (for example, an SRS for Antenna switching (AS) usage used to acquire DL CSI) to the macro BS. Accordingly, there is a possibility that the UE requires two TAs in this scenario. Note that the SRS for AS is a signal for a base station (macro BS) to perform DL CSI measurement (for example, determination of a DL MIMO precoder) by using channel reciprocity, based on SRS reception, and thus is transmitted to the macro BS. On the other hand, an SRS for Codebook/Non-codebook usage is used for determination of a precoder/beam for the PUSCH, and thus is transmitted to the micro BS.

In the HetNet, even if the micro BS has a DL transmission capability, the energy of the micro BS can be saved by turning off DL almost all the time. In this case, the function of the micro BS is similar to that of a UL-only TRP (UL reception point).

### (Transmission Power Control)

### <Transmission Power Control for PRACH>

Actual Physical random access channel (PRACH) transmission power is determined based on target preamble reception power, the pathloss of an RS, and the maximum output power limit.

A UE determines the (actual) transmission power P_{PRACH,b,f,c}(i) of a PRACH on the active UL BWP b in the carrier f of the serving cell c, based on a DL RS for the serving cell c in the transmission occasion i, as in the following equation.
[Math. 1] ${P}_{PRACH , b , f , c} \left(i\right) = min \left\{{P}_{CMAX , f , c}\left(i\right), {P}_{PRACH , target , f , c}+{PL}_{b , f , c}\right\} \left[dBm\right]$

P_{CMAX,f,c}(i) is the maximum output power configured to the UE for the carrier f in the serving cell c in the transmission occasion i. PP_{RACH,target,f,c} is PRACH target received power PREAMBLE_RECEIVED_TARGET_POWER provided by a higher layer for the active UL BWP b in the carrier f of the serving cell c. PL_{b,f,c} is pathloss for the active UL BWP b in the carrier f based on the DL RS associated with PRACH transmission on the active DL BWP in the serving cell c, and is calculated by the UE as (reference signal power (referenceSignalPower, ss-PBCH-BlockPower) [dBm] - higher layer filtered RSRP [dBm]) [dB]. If the active DL BWP is the initial DL BWP and is for multiplexing pattern 2 or 3 for SS/PBCH block and CORESET, the UE determines PL_{b,f,c}, based on an SS/PBCH block associated with the PRACH transmission.

The DL RS used for the pathloss calculation may be referred to as a pathloss (PL)-RS, a pathloss reference RS, and the like.

In an existing RACH process (procedure), if a UE transmits a PRACH and does not receive a RAR of a network or Msg4 of contention/conflict resolution within a specific time window, and hence a random access process is not completed, the UE retransmits the PRACH after a random backoff time.

When PRACH transmission from the UE is not in response to detection of a PDCCH order by the UE, or is in response to detection of a PDCCH order by the UE that triggers a contention based random access procedure, and is associated with a link recovery procedure where a corresponding index (candidate beam index q_new) is associated with an SS/PBCH block, *referenceSignalPower* is provided by *ss-PBCH-BlockPower*.

When PRACH transmission from the UE is in response to detection of a PDCCH order by the UE that triggers a contention free random access procedure, *referenceSignalPower* is provided by corresponding *ss-PBCH-BlockPower*, depending on a DLRS with which a DM-RS of the PDCCH order is quasi-collocated when the PRACH transmission is on a serving cell, or depending on an indicated SS/PBCH block when the PRACH transmission is on a non-serving cell.

When the UE configures resources for periodic CSI-RS reception, or PRACH transmission is associated with a link recovery procedure where a corresponding index (candidate beam index q_new) is associated with a periodic CSI-RS configuration, *referenceSignalPower* is obtained by *ss-PBCH-BlockPower* and powerControlOffsetSS where powerControlOffsetSS provides an offset of CSI-RS transmission power for SS/PBCH block transmission power.

When powerControlOffsetSS is not provided to the UE, the UE assumes an offset of 0 dB. When an active TCI state for a PDCCH that provides a PDCCH order includes two RSs, the UE expects to be configured with one RS having *qcl-Type* being configured to "type D", and the UE uses the one RS when applying a value provided by powerControlOffsetSS.

### (Reception of Pathloss (PL))

The UE may receive, via DL signaling, first information indicating pathloss (PL) estimated and notified (transmitted) by a network and used for transmission power control (TPC). The DL signaling may be at least one of higher layer signaling (for example, RRC or a MAC CE) and physical layer signaling (for example, downlink control information (DCI)).

The UE may calculate UL signal transmission power (for example, transmission power (P_{PRACH,b,f,c}(i)) of a PRACH in equation (1)) for a reception point that does not transmit downlink data by using received pathloss (PL_{b,f,c}(q_{d}), PL_{b,f,c}).

{Option 1} A network may notify the UE of an absolute pathloss (PL) value [dB] for each RS index (transmit the absolute pathloss value to the UE). The UE may directly use the notified absolute pathloss value for calculation of the transmission power.

{Option 2} The network may notify the UE of a relative pathloss (delta PL) value [dB] for each RS index (transmit the relative pathloss value to the UE). The UE may use a pathloss value obtained by applying (adding or subtracting) the received delta PL value to a pathloss value estimated from a DL RS transmitted from a macro cell (central TRP) in an existing manner, for calculation of the transmission power.

Notification/configuration of the PL value/delta PL value in options 1 and 2 may be performed for each index of q_{d}/SSB/CSI-RS/SRS resource/SRS resource set. Notification of one or a plurality of RS indices and the PL value/delta PL value corresponding to each RS index may be performed by DL signaling. The PL value/delta PL value may be interpreted as a PL parameter/delta PL parameter.

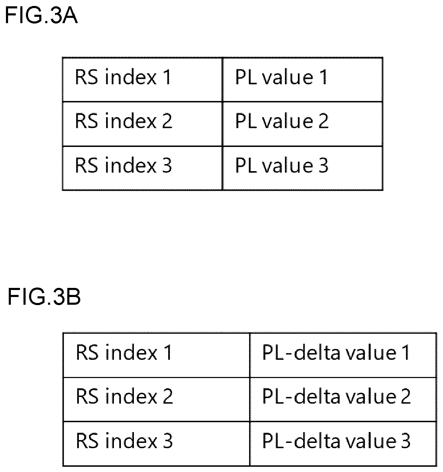

FIG. 3A is a diagram to show an example of association between RS indices and PL values. FIG. 3B is a diagram to show an example of association of RS indices and delta PL values. The association (correspondence) between the RS indices and the PL values/delta PL values is not limited to FIG. 3A and FIG. 3B. For example, one RS index may correspond to a plurality of PL values/delta PL values. Note that the quantization table (range and step) of the PL values/delta PL values may be defined in advance in a specification. A PL value/delta PL value to be notified may be a quantized value or the index of the quantized value.

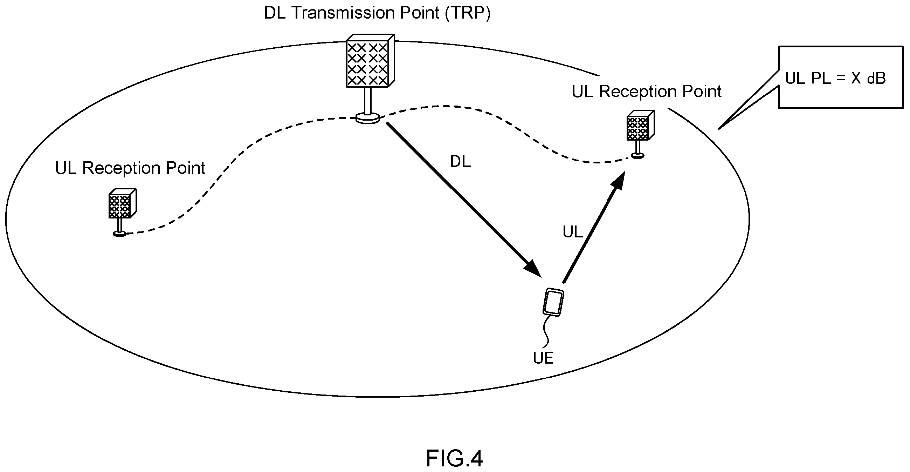

FIG. 4 is a diagram to show an example of option 1 in UL high density deployment. A UL reception point receives/measures a UL signal. When a DL transmission point (macro TRP/gNB) knows the transmission power of the UL signal, the DL transmission point can know the accurate PL value of the UL reception point. In this case, the DL transmission point can notify the UE of the absolute PL value (X [dB]) of the UL reception point.

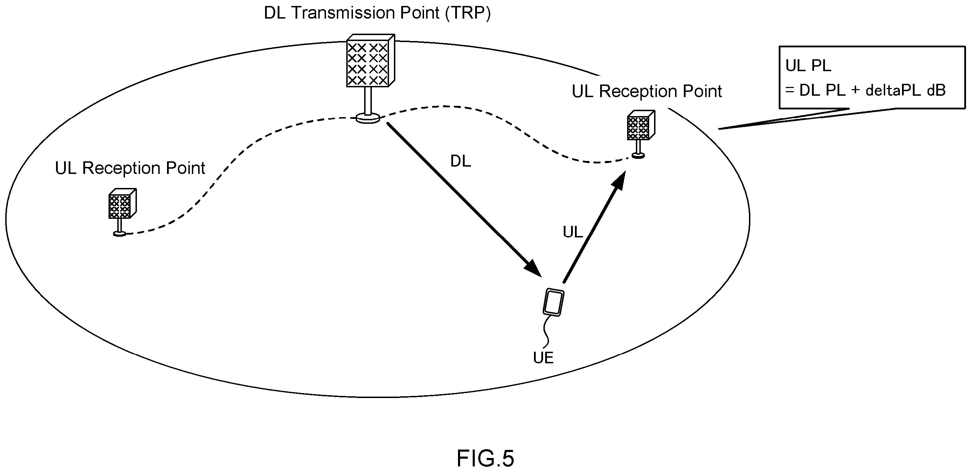

FIG. 5 is a diagram to show an example of option 2 in UL high density deployment. When both a DL transmission point (macro TRP/gNB) and a UL reception point measure the same resource, the DL transmission point may recognize the difference between the PL between the DL transmission point and a UE and the PL between the UL reception point and the UE. In this case, the DL transmission point may notify the UE of the difference (relative PL/delta PL). The relative PL/delta PL may be referred to as a PL offset.

As described above, even when the UE is not notified of a DL RS (RS index) used for pathloss estimation, the UE can calculate transmission power by using the notified PL value/delta PL value.

### <Configuration of PL of PRACH>

A UE may control transmission power for transmitting a PRACH to a UL reception point, based on a configured (received) PL value. When the UL is a PRACH, the UE can transmit the PRACH to the UL reception point, in an RRC connected state. In this case, the UE may control the transmission power of a PRACH, based on the configured PL value. Accordingly, the UE may determine the transmission power control of the PRACH, based on an RRC configuration for configuring a PL value or a relative (delta) PL value.

The configuration of a PRACH in the present disclosure may mean a configuration related to a PRACH in RRC/MAC CE/DCI.

### {Option 1}

The TCI state may be configured for each PRACH resource/PRACH configuration.

### [Option 2]

The PL value or the relative (delta) PL may be configured for the UE for each PRACH configuration.

In a case of PDCCH ordered PRACH, for example, a 1-bit reserved field in DCI may indicate whether to apply the PL value or the relative (delta) PL value to a triggered PRACH. In this case, the DCI may mean that the PRACH is transmitted to a UL reception point.

When the field indicates 0, the UE may measure PL, based on a configured PL RS. When the field indicates 1, the UE may use the PL value or the relative (delta) PL value associated with the UL reception point to control UL (PRACH) transmission power.

### (Analysis)

As described above, it is studied that, to enhance UL coverage, a UL reception point is provided in addition to typical transmission/reception points. A Heterogeneous Network (HetNet) using a macro Base Station (BS) (DL transmission point) and a micro BS (UL reception point) and the like are also under study.

However, in a case where an RS for pathloss (PL) calculation (pathloss RS) is transmitted from a DL transmission point, it remains unclear how to determine a PL value or a PL offset value for a UL reception point (or a micro BS) when a terminal performs UL transmission. Unless the PL value or the PL offset value can be correctly determined, UL transmission power may not be controlled appropriately.

Thus, the inventors of the present invention came up with the idea of a method for enabling appropriate control of UL transmission power.

### (Various Interpretations etc.)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, drop, stop, cancel, puncture, rate match, postpone, not transmit, and the like may be interchangeably interpreted.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel/signal using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be interchangeably interpreted.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

A UL reception point may be connected to a TRP (for example, a base station or the like) or a core network via a wired connection or a wireless connection. The UL reception point may be treated as a network (NW) or a base station. The UL reception point may be capable of transmitting a downlink (DL) signal (for example, a PL value), and may be applied to a base station forming a macro cell. For example, the UL reception point may not transmit downlink data, and may transmit a control signal/channel.

In the present disclosure, a base station, a UL reception point, a UL TRP, a UL-only TRP, and a micro BS may be interchangeably interpreted. The UL reception point may perform only UL reception, or may perform DL transmission when a condition is satisfied.

In the present disclosure, a base station, a DL transmission point, a DL TRP, a DL-only TRP, a macro BS, and a central TRP may be interchangeably interpreted. The DL transmission point may perform only DL transmission, or may perform UL reception when a condition is satisfied.

In the present disclosure, UL dense deployment, a distributed TRP mode, a separated location mode of a transmission/reception point, a distributed transmission/reception mode, a separated TRP mode, TRP type 1, TRP type 2, TRP type A, and TRP type B may be interchangeably interpreted.

The present disclosure may presuppose multi-DCI based multi-TRP, single-DCI based multi-TRP, or at least one of scenario 1 and scenario 2 above.

In the present disclosure, being configured and receiving a configuration (configuration information) may be interchangeably interpreted.

In the present disclosure, a TCI state, a TCI state ID, a TCI state list/set/pool/group, and a TCI state list/set/pool/group ID may be interchangeably interpreted.

In the present disclosure, absolute PL, pathloss (PL), a pathloss value, and a pathloss parameter may be interchangeably interpreted. In the present disclosure, relative PL, delta PL, a PL offset, a PL offset value, an offset of P_{O}, an offset of α, an offset of power/power density [x dBm], pathloss (PL), a PL value, and a PL parameter may be interchangeably interpreted. In the present disclosure, PL, a PL value, a PL RS (PL-RS), and a PL RS ID may be interchangeably interpreted.

In the present disclosure, a CSI-RS, an NZP CSI-RS, a TRS, a CSI-RS for tracking, a CSI-RS including TRS information (higher layer parameter trs-Info), and an NZP CSI-RS resource in an NZP CSI-RS resource set including TRS information may be interchangeably interpreted.

In the present disclosure, a PDCCH order and DCI may be interchangeably interpreted. A PDCCH order may mean a PDCCH indicating PRACH transmission to a UL TRP.

### (Radio Communication Method)

### <Zeroth Embodiment>

In the present disclosure, the use of two TAs for a PRACH in an M-TRP of M-DCI and a PDCCH order may be presupposed.

As a PL-RS for the PRACH, the following (1) or (2) is under study.
(1) An SSB indication of the PDCCH order (an index indicating an SS/PBCH used to determine a RACH occasion for PRACH transmission when values of a random access preamble index are not all 0) is used.
(2) A TCI indicated for a target TRP (a TCI state ID, an RS corresponding to the TCI) is used. In this case, it is assumed that the PDCCH order indicates the TCI state ID.

### {Embodiment 0-1}

When the UE receives the PDCCH order and the PDCCH order indicates the TCI state, the UE may use the PL value or the PL offset value related to the indicated TCI state for PL calculation of the PRACH. In this case, the TCI state may be configured for each PRACH resource/configuration of the PRACH.

### {Embodiment 0-2}

When the UE receives the PDCCH order and the PDCCH order indicates the SSB/CSI-RS index, the UE may use the PL value or the PL offset value related to the indicated SSB/CSI-RS for PL calculation of the PRACH. In this case, the PL value or the PL offset value may be configured for the UE for each configuration of the PRACH (for example, configuration by RRC signaling).

### {Embodiment 0-3}

When the PRACH is transmitted to a UL TRP, Embodiment 0-1/0-2 may be applied. The PDCCH order may include an explicit bit indicating whether or not the PRACH is transmitted to the UL TRP. The UE may be configured with the PL value or the PL offset value for each TCI state or SSB/CSI-RS by RRC signaling. When the PL value or the PL offset value is configured, this means that the related TCI state or SSB/CSI-RS is related to the UL TRP as a PRACH transmission destination.

### <First Embodiment>

The UE may receive configuration information of the PL value or the PL offset value of the PRACH to be transmitted to a UL reception point (UL TRP) by higher layer signaling/physical layer signaling, and control transmission power of the PRACH based on the configuration information. The present embodiment may be combined with option 2 in <Configuration of PL of PRACH> above. For example, a configuration of the PL value or the PL offset value may be included in an RRC information element (for example, ServingCellConfigCommon/ServingCellConfig/BWP/PRACH-Config/PDSCH-Config or the like). The configured PL value or PL offset may be used only for the PRACH, or may be used for all/a part of the PRACH/PUSCH/PUCCH/SRS. The RRC information element may be an information element other than a TCI state (TCI-State) information element.

### {Option 1-1}

In the configuration information, regarding the PL value or the PL offset value of the PRACH, only one value (common value) may be configured for all the configured SSBs/TCI states.

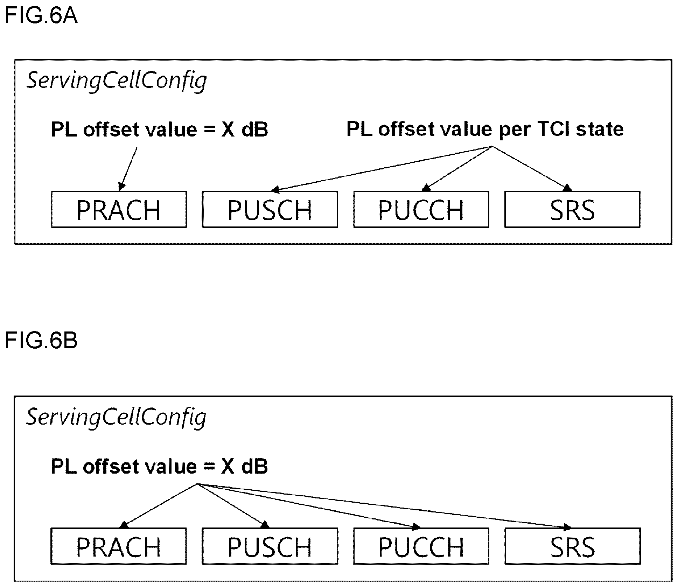

FIG. 6A is a diagram to show a first configuration method for the PL value or the PL offset of option 1-1. In the example of FIG. 6A, the configured PL value or PL offset value is used only for the PRACH. In this case, the methods in <Configuration of PL of PRACH> above may be applied to determination of the PL value or the PL offset value of the PUSCH/PUCCH/SRS. The PL value or the PL offset value of the PUSCH/PUCCH/SRS may be different for each SSB/TCI state. The PL offset value of FIG. 6A may be interpreted as a PL value.

FIG. 6B is a diagram to show a second configuration method for the PL value or the PL offset of option 1-1. In the example of FIG. 6B, the configured common PL value or PL offset value is applied to the PRACH/PUSCH/PUCCH/SRS. The PL offset value of FIG. 6B may be interpreted as a PL value.

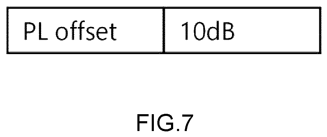

FIG. 7 is a diagram to show an example of the PL offset value of option 1-1. Although FIG. 7 shows an example in which the PL offset value is 10 dB, another value may be used. This single PL offset value may be configured for all the SSBs/TCI states. A PL value may be configured instead of the PL offset value.

The UE may determine whether to use the PL value or the PL offset value for PL adjustment for a UL TRP (transmission power control of the PRACH), based on an explicit indication in the PDCCH order. For example, when the UE is indicated with bit field 0, the UE may not apply the PL value or the PL offset value, whereas when the UE is indicated with bit field 1, the UE may apply the PL value or the PL offset value.

The UE may determine whether to use the PL value or the PL offset value for PL adjustment for a UL TRP (transmission power control of the PRACH), based on an indication of the SSB/CSI-RS/TCI state ID in the PDCCH order. For example, when the UE is indicated with SSBs #0 to 31, the UE may apply the PL value or the PL offset value, whereas when the UE is indicated with SSBs #32 to 63, the UE may not apply the PL value or the PL offset value (may apply the PL value).

One common value may be configured for all the SSBs/CSI-RSs/TCI states. Thus, the UE may receive an additional indication indicating the PL value configured by which SSB/CSI-RS/TCI state is to be applied, and determine to apply the PL value configured by which SSB/CSI-RS/TCI state, based on the additional indication.

The configured PL value/PL offset value in the present disclosure may be applied to calculate the PL only when the UE transmits a signal to a UL TRP (when the PL-RS indicates another TRP). When signaling to another TRP, the UE may ignore the configured PL offset value in the present disclosure and calculate the PL.

Both the PL value and the PL offset value may be configured by an RRC information element, and an indication indicating whether to use the PL value or use the PL offset value may be included in the PDCCH order.

### {Option 1-2}

In the configuration information, regarding the PL value or the PL offset value of the PRACH, one value (different value) may be configured for each of the configured SSBs/TCI states. In other words, a list of PL values or PL offset values for the SSBs/TCI states may be configured.

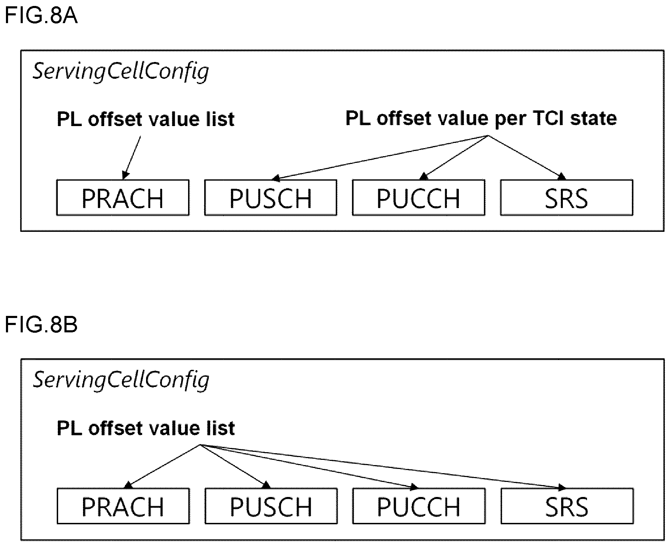

FIG. 8A is a diagram to show a first configuration method for the PL values or the PL offsets of option 1-2. In the example of FIG. 8A, a list of configured PL values or PL offset values is used only for the PRACH. In this case, the methods in <Configuration of PL of PRACH> above may be applied to determination of the PL value or the PL offset value of the PUSCH/PUCCH/SRS. The PL value or the PL offset value of the PUSCH/PUCCH/SRS may be different for each SSB/TCI state. The PL offset value of FIG. 8A may be interpreted as a PL value.

FIG. 8B is a diagram to show a second configuration method for the PL values or the PL offsets of option 1-2. In the example of FIG. 8B, a list of configured PL values or PL offset values is commonly applied to the PRACH/PUSCH/PUCCH/SRS. The PL offset value of FIG. 8B may be interpreted as a PL value.

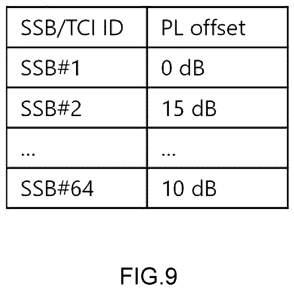

FIG. 9 is a diagram to show an example of the PL offset values of option 1-2. As shown in FIG. 9, the PL offset values are defined respectively for SSB IDs/TCI state IDs. The UE may determine the PL offset values, based on the configured SSB IDs/TCI state IDs. A PL value may be configured instead of each PL offset value.

The UE may determine whether to use the PL value or the PL offset value for PL adjustment for a UL TRP (transmission power control of the PRACH), based on an explicit indication in the PDCCH order. For example, when the UE is indicated with bit field 0, the UE may not apply the PL value or the PL offset value, whereas when the UE is indicated with bit field 1, the UE may apply the PL value or the PL offset value.

The UE may determine whether to use the PL value or the PL offset value for PL adjustment for a UL TRP (transmission power control of the PRACH), based on the SSB/CSI-RS/TCI state ID indicated by the PDCCH order. For example, the PL value or the PL offset value corresponding only to a part of the SSBs/TCI states may be configured. For example, the PL value or the PL offset value may be configured only for SSBs #0 to 31. When the UE is indicated with SSBs #0 to 31, the UE may apply the PL value or the PL offset value, whereas when the UE is indicated with SSBs #32 to 63, the UE may not apply the PL value or the PL offset value.

The configured PL values/PL offset values (list) in the present disclosure may be applied to calculate the PL only when the UE transmits a signal to a UL TRP (when the PL-RS indicates another TRP). When signaling to another TRP, the UE may ignore the configured PL offset value in the present disclosure and calculate the PL.

Both the PL values and the PL offset values (the list of PL values and PL offset values) may be configured by an RRC information element, and an indication indicating whether to use the PL values or use the PL offset values may be included in the PDCCH order.

According to the first embodiment, the UE can appropriately determine the PL offset value to be used for transmission power of the PRACH.

### <Second Embodiment>

The number of configured PL values or PL offset values for the PRACH (i.e., the number of UL TRPs) will be described. For a PL-RS (DL TRP), one or a plurality of UL TRPs may be present. Thus, the number of configured PL values or PL offset values may be one or more.

### {Option 2-1}

Different PL values or PL offset values (a set of PL values or PL offset values) may be related to the SSB/CSI-RS/TCI state IDs (similarly to option 1-2). In other words, as many PL values or PL offset values as the number of SSB/CSI-RS/TCI state IDs may be configured.

### {Option 2-2}

The UE may receive a PDCCH order (DCI indicating PRACH transmission) including a plurality of bits indicating which PL offset value is to be applied. In option 2-2, the PL offset value may be interpreted as a PL value.

The PDCCH order may include bits indicating the PL offset value. The number of bits (X bits) may be fixed (for example, X = 2), or may be variable according to the number of configured PL values or PL offset values. For example, the number of bits may be log₂(Y) bits. Here, Y is the number of configured PL values or PL offset values.

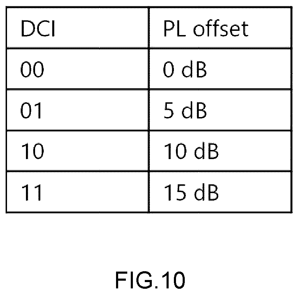

FIG. 10 is a diagram to show an example of correspondence between DCI codepoints and the PL offset values in option 2-2. In the example of FIG. 10, 2-bit DCI codepoints are assigned to four PL offset values. A PL value may be configured instead of each PL offset value.

The PL offset values for the DCI codepoints may be fixed, or may be changeable by higher layer signaling (for example, RRC/MAC CE).

The UE may report a maximum number of PL offset values configured for each SSB/CSI-RS/TCI state as UE capability information. The UE may report a maximum number of SSBs/CSI-RSs/TCI states for which the PL offset values are configured as UE capability information.

According to the present disclosure, the UE can use an appropriate PL value or PL offset value.

### <PL-RS of PRACH>

In a case of the PRACH of the PDCCH order, regarding how the UE determines a related DL RS (PL-RS corresponding to the PRACH), the following (1) and (2) are applied.
(1) In Rel. 15, as the PL-RS of the PRACH, a QCL source RS of the PDCCH order (i.e., a QCL source RS of the PDCCH) is used.
(2) In Rel. 18, when two TAs are applied, a 1-bit indication field of the PDCCH order indicates which is to be applied between the following 2-1 and 2-2.
   (2-1) As the PL-RS of the PRACH, a QCL source RS of the PDCCH order (i.e., a QCL source of the PDCCH) is used (similarly to option 1).
   (2-2) As the PL-RS of the PRACH, an SSB indication of the PDCCH order (SS/PBCH index) is used.

When the PRACH is transmitted to a TRP as a transmission source of the PDCCH order, 2-1 may be used, and otherwise, 2-2 may be used.

The PDCCH order may support only Contention Free Random Access (CFRA). In other words, the SSB index of the PDCCH order may be indicated only for CFRA, and when the PDCCH order triggers Contention based Random Access (CBRA), the preamble index and the SSB index may not be indicated. When the base station (gNB) desires to acquire second TA for a second TRP in a case in which two TAs of an M-TRP are applied, the SSB index is indicated in order to confirm that PRACH transmission is directed to the second

### TRP.

### <Third Embodiment>

The UE may receive the PDCCH order indicating PRACH transmission (for example, the PDCCH order indicating PRACH transmission to a UL reception point), and determine, based on a field of the PDCCH order, whether to apply the PL offset value for calculation of transmission power of the PRACH. In a case of the PDCCH ordered PRACH, regarding a method of determining which PL offset value (PL value/PL offset value when the PL-RS is not configured) is applied (or is not applied) to the PRACH, at least one of the following options may be applied.

In the present disclosure, a PL-RS may be a DL RS (for example, an SSB/CSI-RS/TRS) for calculating PL_{b,f,c}. In the present disclosure, a PL offset value and a PL value may be interchangeably interpreted. A DL/UL reception point and a DL/UL TRP may be interchangeably interpreted.

### {Option 3-1}

In option 3-1, a case in which a Rel-15 PDCCH order is used (a case in which a Rel-18 PDCCH order is not configured) will be described.

The UE may use a QCL source RS of the PDCCH order (i.e., a QCL source of the PDCCH) as the PL-RS of the PRACH. The QCL source RS of the PDCCH order may be an SSB or a CSI-RS/TRS.

The UE may determine whether to transmit the PRACH to a DL/UL TRP or transmit the PRACH to a UL TRP, based on the QCL source RS of the PDCCH order.

When the UE transmits the PRACH to the UL TRP (i.e., when the QCL source RS of the PDCCH order is an SSB/CSI-RS/TCI state of the UL TRP, or is associated with PL offset value = 0), the UE may not apply the PL offset value to transmission power control of the

### PRACH.

When the UE transmits the PRACH to the DL/UL TRP (i.e., when the QCL source RS of the PDCCH order is an SSB/CSI-RS/TCI state of the DL/UL TRP, or is associated with PL offset value > 0), the UE may apply the PL offset value to transmission power control of the

### PRACH.

As shown in FIG. 9, the PL offset values may be defined respectively for the SSB IDs/TCI state IDs in a specification, or may be configured/indicated to the UE. The UE may determine the PL offset values, based on the definition/configuration/indication. The SSB ID may be interpreted as a CSI-RS or a DL-RS. The TCI state ID may be a DL/joint TCI state.

### {Option 3-2}

When the Rel-18 PDCCH order is used (when the Rel-18 PDCCH order is configured/triggered), the 1-bit indication field of the PDCCH order may indicate one of the following 3-2-1 and 3-2-2.
3-2-1: The PL-RS of the PRACH is a QCL source RS of the PDCCH order (i.e., a QCL source of the PDCCH) (which is indicated by bit: 0, for example). This means that the PRACH is transmitted to a DL/UL TRP, and the PL offset value is applied to transmission power control of the PRACH.
3-2-2: The PL-RS of the PRACH is an SSB indicated by the PDCCH order (which is indicated by bit: 1, for example). This means that the PRACH is transmitted to a UL TRP, and the PL offset value corresponding to the PL-RS is not applied to transmission power control of the PRACH.
3-2-1': The PL-RS of the PRACH is a QCL source RS of the PDCCH order (i.e., a QCL source of the PDCCH) (which is indicated by bit: 0, for example). This means that the PRACH is transmitted to a DL/UL TRP, and the PL offset value is not applied to transmission power control of the PRACH.
3-2-2': The PL-RS of the PRACH is an SSB indicated by the PDCCH order (which is indicated by bit: 1, for example). This means that the PRACH is transmitted to a UL TRP, and the PL offset value is applied to transmission power control of the PRACH.
Variation: It may be indicated by bit: 1 that the PL-RS of the PRACH is a QCL source RS of the PDCCH order (i.e., a QCL source of the PDCCH). This may mean that the PRACH is transmitted to a UL TRP, and the PL offset value may be applied to transmission power control of the PRACH. In other words, both bit: 0 and bit: 1 may mean that the PL-RS of the PRACH is a QCL RS of the PDCCH order, and a difference between bit: 0 and bit: 1 may only be whether the PL offset value is applied.

A bit indicating whether the PL-RS of the PRACH is a QCL source RS of the PDCCH order or whether the PL-RS of the PRACH is an SSB indicated by the PDCCH order and a bit indicating whether or not the PL offset value is applied to transmission power control of the PRACH may be different bits.

The UE may receive the configuration of the PL value or the PL offset value corresponding to the PL-RS by higher layer signaling/physical layer signaling, and apply the PL value or the PL offset value corresponding to the PL-RS to transmission power control of the PRACH.

According to the present embodiment, when the PDCCH order indicating the PRACH is received, the PL-RS to be used for PRACH transmission power calculation may be appropriately determined.

### <Supplements>

Each embodiment may be applied to specific PRACH transmission. The specific PRACH may be applied to a PDCCH ordered PRACH, a PRACH triggered by a BFR (a BFR on an SpCell), a PRACH in an RRC reconfiguration with synchronization, or the like, for example.

Each embodiment may be applied only when a corresponding RRC parameter is configured. When it is not configured, PRACH PL may be calculated by an existing method. In other words, PL adjustment for a UL TRP is not performed.

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether or not to support" may be interchangeably interpreted.

The specific UE capability may indicate at least one of the following:
- supporting of specific processing/operation/control/information for at least one of the embodiments above
- whether TPC enhancement (PL estimation) of a PRACH is supported
- the number of supported PL values or PL offset values
- the number of supported UL TRPs

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Notes)

Regarding one embodiment of the present disclosure, the following supplementary notes of the invention will be given.

### {Supplementary Note 1}

A terminal including:
a receiving section that receives configuration information of a pathloss (PL) value or a pathloss (PL) offset value of a Physical random access channel (PRACH) transmitted to a UL reception point; and
a control section that controls transmission power of the PRACH, based on the configuration information.

### {Supplementary Note 2}

The terminal according to supplementary note 1, wherein
in the configuration information, regarding the PL value or the PL offset value, a common value is configured for all configured Synchronization Signal Blocks (SSBs) or Transmission Configuration Indication (TCI) states.

### {Supplementary Note 3}

The terminal according to supplementary note 1 or 2, wherein
in the configuration information, regarding the PL value or the PL offset value, a different value is configured for each of configured Synchronization Signal Blocks (SSBs) or Transmission Configuration Indication (TCI) states.

### {Supplementary Note 4}

The terminal according to any one of supplementary notes 1 to 3, wherein
the receiving section receives a Physical Downlink Control Channel (PDCCH) order including a plurality of bits indicating which PL value or PL offset value is to be applied.

### (Supplementary Notes)

Regarding one embodiment of the present disclosure, the following supplementary notes of the invention will be further given.

### {Supplementary Note 1}

A terminal including:
a receiving section that receives a Physical Downlink Control Channel (PDCCH) order indicating Physical random access channel (PRACH) transmission; and
a control section that determines, based on a field of the PDCCH order, whether to apply a pathloss (PL) offset value to calculation of transmission power of the PRACH.

### {Supplementary Note 2}

The terminal according to supplementary note 1, wherein
when the PRACH is transmitted to a UL reception point, the control section does not apply the PL offset value to transmission power control of the PRACH.

### {Supplementary Note 3}

The terminal according to supplementary note 1 or 2, wherein
when the PRACH is transmitted to a DL reception point or a UL reception point, the control section applies the PL offset value to transmission power control of the PRACH.

### (Radio Communication System)

Hereinafter, a structure of a radio communication system according to one embodiment of the present disclosure will be described. In this radio communication system, any of the radio communication methods according to each embodiment of the present disclosure described above may be used alone or may be used in combination for communication.

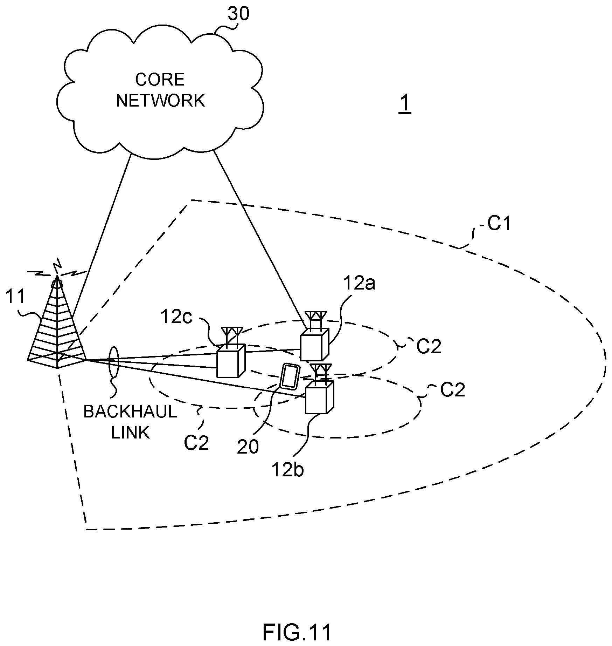

FIG. 11 is a diagram to show an example of a schematic structure of the radio communication system according to one embodiment. A radio communication system 1 (which may be simply referred to as a system 1) may be a system implementing communication using Long Term Evolution (LTE), 5th generation mobile communication system New Radio (5G NR) and so on the specifications of which have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

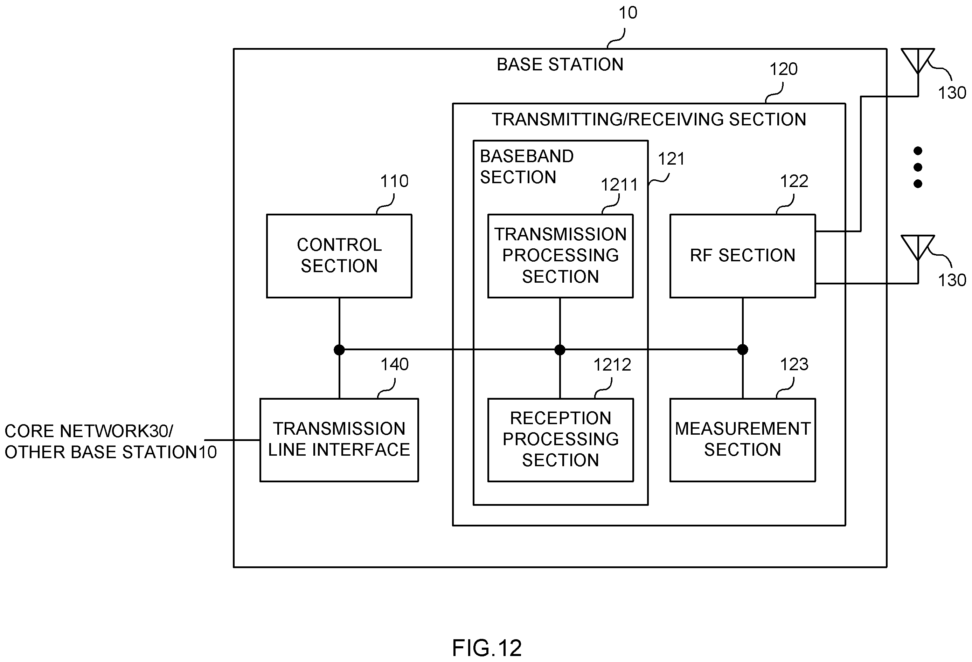

FIG. 12 is a diagram to show an example of a structure of the base station according to one embodiment. The base station 10 includes a control section 110, a transmitting/receiving section 120, transmitting/receiving antennas 130 and a transmission line interface (communication path interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit configuration information of a pathloss (PL) value or a pathloss (PL) offset value of a Physical random access channel (PRACH) transmitted to a UL reception point.

The control section 110 may receive the PRACH of which transmission power is controlled based on the configuration information.

The transmitting/receiving section 120 may transmit a Physical Downlink Control Channel (PDCCH) order indicating Physical random access channel (PRACH) transmission.

The control section 110 may control reception of the PRACH, with whether to apply a pathloss (PL) offset value to calculation of transmission power of the PRACH being determined based on a field of the PDCCH order.

### (User Terminal)

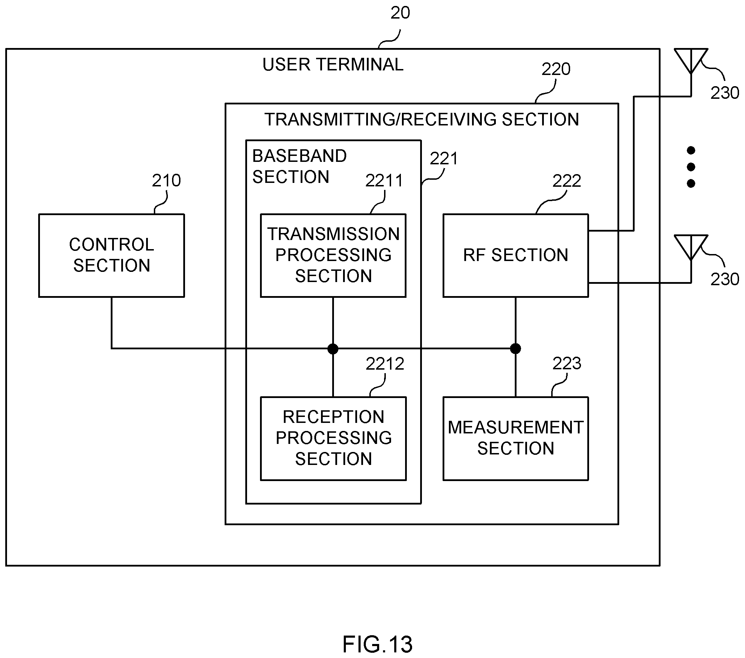

FIG. 13 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the

### transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive configuration information of a pathloss (PL) value or a pathloss (PL) offset value of a Physical random access channel (PRACH) transmitted to a UL reception point.

The control section 210 may control transmission power of the PRACH, based on the configuration information.

In the configuration information, regarding the PL value or the PL offset value, a common value may be configured for all configured Synchronization Signal Blocks (SSBs) or Transmission Configuration Indication (TCI) states.

In the configuration information, regarding the PL value or the PL offset value, a different value may be configured for each of configured Synchronization Signal Blocks (SSBs) or Transmission Configuration Indication (TCI) states.

The transmitting/receiving section 220 may receive a Physical Downlink Control Channel (PDCCH) order including a plurality of bits indicating which PL value or PL offset value is to be applied.

The transmitting/receiving section 220 may receive a Physical Downlink Control Channel (PDCCH) order indicating Physical random access channel (PRACH) transmission.

The control section 210 may determine, based on a field of the PDCCH order, whether to apply a pathloss (PL) offset value used for calculation of transmission power of the PRACH.

When the PRACH is transmitted to a UL reception point, the control section 210 may not apply the PL offset value to transmission power control of the PRACH.

When the PRACH is transmitted to a DL reception point or a UL reception point, the control section 210 may apply the PL offset value to transmission power control of the PRACH.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

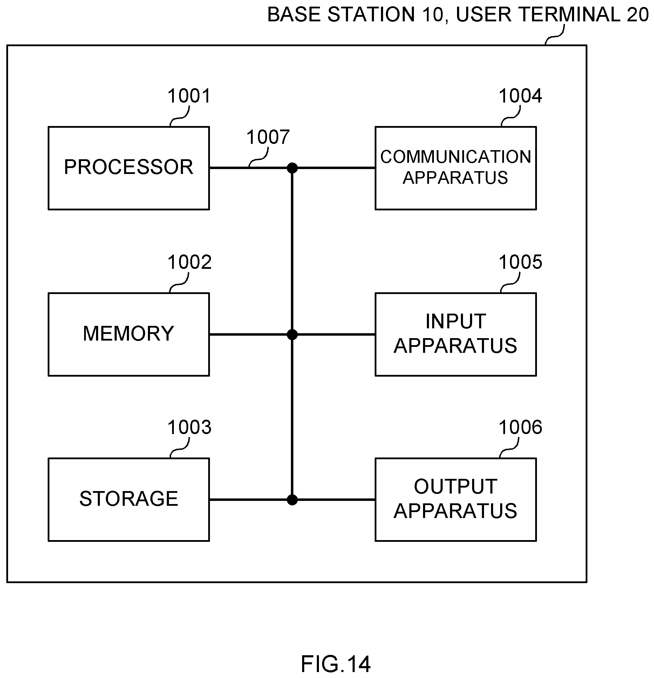

For example, a base station, a user terminal, and so on according to one embodiment of the present disclosure may function as a computer that executes the processes of the radio communication method of the present disclosure. FIG. 14 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

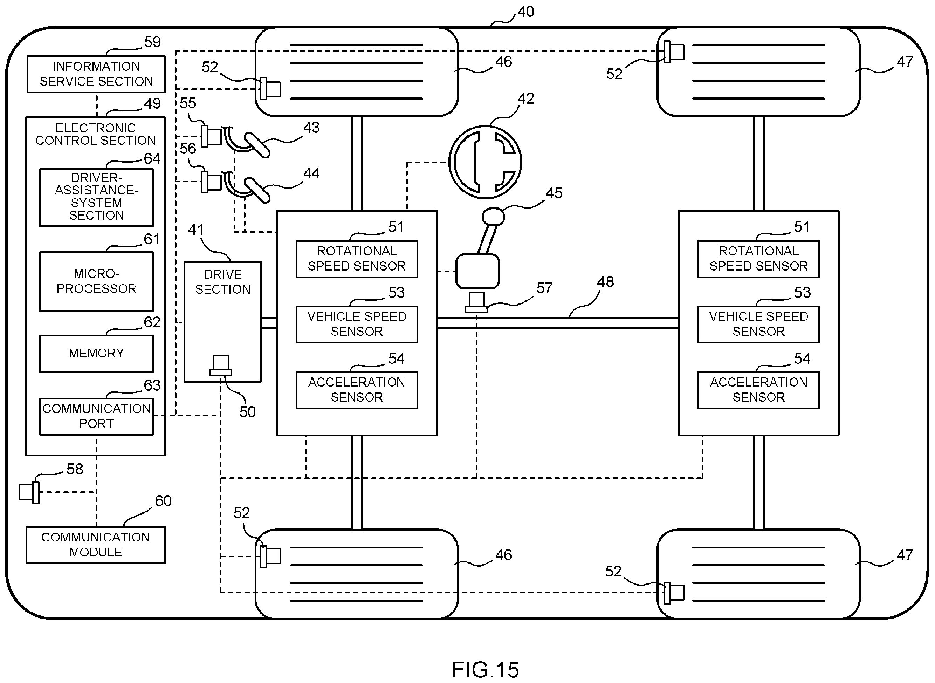

FIG. 15 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives configuration information of a pathloss (PL) value or a pathloss (PL) offset value of a Physical random access channel (PRACH) transmitted to a UL reception point; and
a control section that controls transmission power of the PRACH, based on the configuration information.

2. The terminal according to claim 1, wherein
in the configuration information, regarding the PL value or the PL offset value, a common value is configured for all configured Synchronization Signal Blocks (SSBs) or Transmission Configuration Indication (TCI) states.

3. The terminal according to claim 1, wherein
in the configuration information, regarding the PL value or the PL offset value, a different value is configured for each of configured Synchronization Signal Blocks (SSBs) or Transmission Configuration Indication (TCI) states.

4. The terminal according to claim 1, wherein
the receiving section receives a Physical Downlink Control Channel (PDCCH) order including a plurality of bits indicating which PL value or PL offset value is to be applied.

5. A radio communication method for a terminal, comprising:
receiving configuration information of a pathloss (PL) value or a pathloss (PL) offset value of a Physical random access channel (PRACH) transmitted to a UL reception point; and
controlling transmission power of the PRACH, based on the configuration information.

6. A base station comprising:
a transmitting section that transmits configuration information of a pathloss (PL) value or a pathloss (PL) offset value of a Physical random access channel (PRACH) transmitted to a UL reception point; and
a receiving section that receives the PRACH of which transmission power is controlled based on the configuration information.
